# EUROPEAN PATENT APPLICATION

(11) **EP 3 575 710 A1**
(43) Date of publication of application: **04.12.2019**
(21) Application number: 18745205.7
(22) Date of filing: 17.01.2018
(51) Int. Cl.: F25B 1/00, F25B 13/00, F25B 43/00

(54) **REFRIGERATION DEVICE**

(30) Priority: 30.01.2017 JP 2017014089
(71) Applicant: Daikin Industries, Ltd., Osaka-shi, Osaka 530-8323 (JP)
(72) Inventor: KUMAKURA Eiji, Osaka-shi Osaka 530-8323 (JP); FURUSHO Kazuhiro, Osaka-shi Osaka 530-8323 (JP)
(74) Representative: Hoffmann Eitle
(86) International application number: PCT/JP2018/001174
(87) International publication number: WO 2018/139304

(57) **Abstract**

The refrigerant device (10) includes a refrigerant circuit (20) performing a refrigeration cycle in which one of the heat-source-side heat exchanger (23) and the utilization-side heat exchanger (28) serves as a radiator, while the other serves as an evaporator. The refrigerant circuit (20) is filled with a refrigerant including hydrocarbon fluoride having the property of causing disproportional reaction. The refrigerant circuit (20) includes an ejector (25) provided with a depressurization channel (25a), a suction channel (25b) and an ejection channel (25c), a gas-liquid separator (26) into which a refrigerant ejected from the ejection channel (25c) flows, an expansion mechanism (27) depressurizing a liquid refrigerant flowing from the gas-liquid separator (26) into the evaporator, and a suction pipe (21b) guiding a gas refrigerant of the gas-liquid separator (26) into the compressor (21). As a result, it is possible to reduce the risk of disproportional reaction of the refrigerant.

## Description

### TECHNICAL FIELD

The present invention relates to a refrigeration device.

### BACKGROUND ART

Conventionally, there has been known a refrigeration device including a refrigerant circuit provided with a compressor, a heat-source-side heat exchanger, and a utilization-side heat exchanger. In this refrigerant circuit, refrigerant is circulated and a vapor compression refrigeration cycle is performed (see, for example, Paten Document 1). The refrigeration device disclosed in Patent Document 1 is configured such that the cooling operation and the heating operation can be selectively performed through switching of the status of four-way switching valve. In both of the operations, a low-pressure refrigerant flowing from the heat exchanger serving as an evaporator is sucked into the compressor, compressed to be high-pressure refrigerant and discharged.

### CITATION LIST

### PATENT DOCUMENT

Japanese Unexamined Patent Publication No. 2016-038134

### SUMMARY OF THE INVENTION

### TECHNICAL PROBLEM

As refrigerants circulating in a refrigerant circuit, refrigerants having the property of causing disproportional reaction may be used. Such refrigerants show the property of causing disproportional reaction at a high temperature and under high pressure.

As in a case with the refrigeration device of Patent Document 1, in a case where the pressure of refrigerant quickly changes from low to high in the compressor, the compression ratio is likely to become relatively larger, resulting in a relatively higher discharge gas temperature of the compressor. Such refrigeration device has a drawback in that the above-mentioned refrigerant, which shows the property of causing disproportional reaction at a high temperature and under high pressure, is hard to use.

In view of the foregoing background, it is therefore an object of the present disclosure to reduce the risk of disproportional reaction of refrigerant having the property of causing disproportional reaction in a refrigeration device including a refrigerant circuit filled with such refrigerant.

### SOLUTION TO THE PROBLEM

A first aspect of the present disclosure is directed to a refrigeration device (10). The refrigeration device (10) includes refrigerant circuit (20) including a compressor (21), a heat-source-side heat exchanger (23), and a utilization-side heat exchanger (28). The refrigerant circuit (20) performs a vapor compression refrigeration cycle in which one of the heat-source-side heat exchanger (23) and the utilization-side heat exchanger (28) serves as a radiator, the other of the heat-source-side heat exchanger (23) and the utilization-side heat exchanger (28) serves as an evaporator. In this refrigeration device (10), the refrigerant circuit (20) is filled with a refrigerant includes hydrocarbon fluoride having the property of causing disproportional reaction. The refrigerant circuit (20) further includes: an ejector (25) provided with a depressurization channel (25a) depressurizing the refrigerant flowing from the radiator, a suction channel (25b) sucking the refrigerant flowing from the evaporator through a depressurization effect of the depressurization channel (25a), and an ejection channel (25c) merging, pressurizing and ejecting the refrigerant of the depressurization channel (25a) and the refrigerant of the suction channel (25b); a gas-liquid separator (26) into which the refrigerant ejected from the ejection channel (25c) flows; an expansion mechanism (27) depressurizing a liquid refrigerant flowing from the gas-liquid separator (26) into the evaporator, the liquid refrigerant being included in the refrigerant; and a suction pipe (21b) guiding a gas refrigerant of the gas-liquid separator (26) into the compressor (21), the gas refrigerant being included in the refrigerant.

According to the first aspect, a vapor compression refrigeration cycle is performed in the refrigerant circuit (20). In this refrigeration cycle, the high-pressure refrigerant discharged from the compressor (21) is condensed in the condenser, flows into the depressurization channel (25a) of the ejector (25), and is depressurized. The refrigerant thus depressurized merges, in the ejection channel (25c), with the refrigerant sucked into the suction channel (25b) and then pressurized after flowing from the evaporator through the depressurization effect in the depressurization channel (25a). The refrigerant thus pressurized flows into the gas-liquid separator (26) and is divided into a gas refrigerant and a liquid refrigerant. The liquid refrigerant of the gas-liquid separator (26) is depressurized in the expansion mechanism (27), and flows into the evaporator and then evaporates. The gas refrigerant of the gas-liquid separator (26) is guided into the compressor (21) via the suction pipe (21b).

The refrigerant circuit (20) is filled with a refrigerant including hydrocarbon fluoride having the property of causing disproportional reaction. Such refrigerant shows the property of causing disproportional reaction especially at a high temperature and under high pressure. On the other hand, according to the first aspect, the gas refrigerant of the gas-liquid separator (26) is guided into the compressor (21). The gas refrigerant of the gas-liquid separator (26) is pressurized in an ejection channel (25c) of the ejector (25) and thus has a pressure higher than that of a low-pressure refrigerant flowing out of the evaporator. Hence, the compression ratio in this case is smaller than in a case where the low-pressure refrigerant flowing out of the evaporator is guided into the compressor (21), resulting in lower discharge gas temperature of the compressor (21). Therefore, the disproportional reaction of the refrigerant is unlikely to occur.

According to a second aspect of the present disclosure, in the first aspect, the above refrigerant is a refrigerant including HFO-1123.

In the second aspect, the refrigerant including HFO-1123 is filled in the refrigerant circuit (20) and circulated in this refrigerant circuit (20).

### ADVANTAGES OF THE INVENTION

According to the first aspect, the pressure of the refrigerant sucked into the compressor (21) can be increased as compared with the case where the low-pressure refrigerant flowing out of the evaporator is guided into the compressor (21). That is, making the compression ratio relatively smaller and the discharge gas temperature of the compressor (21) relatively lower enables to reduce the risk of a disproportional reaction of the refrigerant.

### BRIEF DESCRIPTION OF THE DRAWINGS

[FIG. 1] FIG. 1 illustrates a schematic view of a refrigerant circuit of an air conditioner of an embodiment.
[FIG. 2] FIG. 2 illustrates a schematic view of a refrigerant circuit of an air conditioner of a reference example.

### DESCRIPTION OF EMBODIMENTS

Embodiments of the present disclosure will be described in detail with reference to the drawings. The embodiments below are merely exemplary ones in nature, and are not intended to limit the scope, applications, or use of the present disclosure.

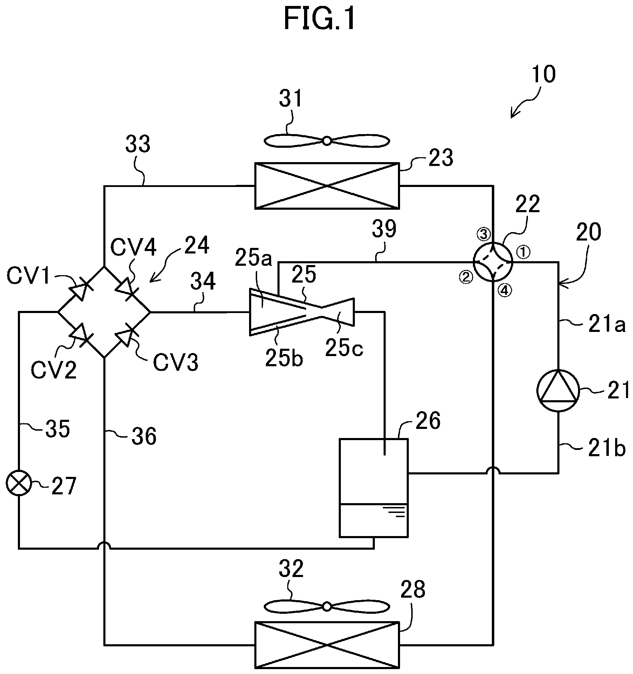

As shown in FIG. 1, the air conditioner (10) of the present embodiment is a refrigeration device of the present disclosure and includes a refrigerant circuit (20). The refrigerant circuit (20) is filled with a refrigerant including hydrocarbon fluoride having the property of causing disproportional reaction. The refrigerant circuit (20) is configured such that the refrigerant is reversibly circulated so that the vapor compression refrigeration cycle is performed.

The refrigerant circuit (20) includes a compressor (21), a four-way switching valve (22), an outdoor heat exchanger (23), a bridge circuit (24), an ejector (25), a gas-liquid separator (26), an expansion valve (27), and an indoor heat exchanger (28). The outdoor heat exchanger (23) is a heat-source-side heat exchanger, while the indoor heat exchanger (28) is a utilization-side heat exchanger.

The discharge pipe (21a) of the compressor (21) is connected to a first port of the four-way switching valve (22) and the suction pipe (21b) of the compressor (21) is connected to the gas-liquid separator (26). A second port of the four-way switching valve (22) is connected to an inlet end of a suction duct (39). A third port of the four-way switching valve (22) is connected to a gas-side end of the outdoor heat exchanger (23). A fourth port of the four-way switching valve (22) is connected to a gas-side end of the indoor heat exchanger (28).

The bridge circuit (24) includes a first to a fourth check valves (CV1, CV2, CV3, CV4). A liquid-side end of the outdoor heat exchanger (23) is connected between the first check valve (CV1) and the fourth check valve (CV4) of the bridge circuit (24) via a first duct (33). A liquid-side end of the indoor heat exchanger (28) is connected between the second check valve (CV2) and the third check valve (CV3) of the bridge circuit (24) via a fourth duct (36).

An inlet end of a second duct (34) is connected between the third check valve (CV3) and the fourth check valve (CV4) of the bridge circuit (24). An outlet end of the second duct (34) communicates with a gas layer of the gas-liquid separator (26). An outlet end of a third duct (35) is connected between the first check valve (CV1) and the second check valve (CV2) of the bridge circuit (24). An inlet end of the third duct (35) communicates with a liquid layer of the gas-liquid separator (26). The second duct (34) is provided with the ejector (25), while the third duct (35) is provided with the expansion valve (27). The suction pipe (21b) extending from the gas layer of the gas-liquid separator (26) is connected to a suction port of the compressor (21). The expansion valve (27) is an expansion mechanism.

The four-way switching valve (22) is switchable between a first state (indicated by the solid lines shown in FIG. 1) and a second state (indicated by the dashed lines shown in FIG. 1). In the first state, the first port communicates with the third port, and the second port communicates with the fourth port. In the second state, the first port communicates with the fourth port, and the second port communicates with the third port. In other words, when the four-way switching valve (22) is in the first state in the refrigerant circuit (20), the refrigerant is circulated in a cooling cycle in which the indoor heat exchanger (28) serves as the evaporator and the outdoor heat exchanger (23) serves as a radiator. When the four-way switching valve (22) is in the second state in the refrigerant circuit (20), the refrigerant is circulated in a heating cycle in which the indoor heat exchanger (28) serves as the radiator and the outdoor heat exchanger (23) serves as the evaporator.

The outdoor heat exchanger (23) is a cross-fin type fin-and-tube heat exchanger. In the outdoor heat exchanger, outdoor air taken in by an outdoor fan (31) and the refrigerant are subject to heat exchange with each other. The indoor heat exchanger (28) is a cross-fin type fin-and-tube heat exchanger. In the indoor heat exchanger, indoor air taken in by an indoor fan (32) and the refrigerant are subject to heat exchange with each other. The expansion valve (27) is an electronic expansion valve with variable opening degrees. The gas-liquid separator (26) is a closed container formed into a vertically long and cylindrical shape, and serves to separate the refrigerant flowing in into a gas refrigerant and a liquid refrigerant.

The ejector (25) is provided with a depressurization channel (25a) through which a drive fluid flows, a suction channel (25b) through which a suction fluid sucked by the drive fluid flowing through the depressurization channel (25a) flows, and an ejection channel (25c) through which a refrigerant flowing through the suction channel (25b) and a refrigerant flowing through the depressurization channel (25a) merge with each other and then ejected out. The suction channel (25b) of the ejector (25) is connected to the outlet end of the suction duct (39). The inlet end of the suction duct (39) is connected to the second port of the four-way switching valve (22). In other words, the refrigerant flowing from the heat exchanger (23, 28) serving as the radiator flows into the depressurization channel (25a), while the refrigerant flowing from the heat exchanger (23, 28) serving as the evaporator is sucked into the suction channel (25b).

The ejector (25) is configured such that the drive fluid flowing into the depressurization channel (25a) is accelerated by using a nozzle provided in the ejector (25) and depressurized, thereby sucking the suction fluid from the suction duct (39) into the suction channel (25b). Further, the ejector (25) is configured such that the suction fluid and the drive fluid are mixed with each other in the ejection channel (25c) to be a mixed fluid, which is decelerated and pressurized by using a diffusor provided in the ejector (25), and then ejected.

### -Operation-

In the air conditioner (10) described above, the circulation direction of the refrigerant in the refrigerant circuit (20) is reversely switchable, thereby performing the cooling operation and the heating operation.

### <Cooling Operation>

In the cooling operation, the four-way switching valve (22) is set in the first state. When the compressor (21) is operated in this state, the outdoor heat exchanger (23) serves as the radiator and the indoor heat exchanger (28) serves as the evaporator, thereby performing a refrigeration cycle.

The high-pressure refrigerant discharged from the compressor (21) flows into the outdoor heat exchanger (23) via the four-way switching valve (22), dissipates heat to outdoor air and is condensed. The high-pressure refrigerant (drive fluid) flowing from the outdoor heat exchanger (23) flows into the depressurization channel (25a) of the ejector (25) via the bridge circuit (24). The high-pressure refrigerant flowing into the depressurization channel (25a) is accelerated by the nozzle and depressurized. Through this depressurization effect, the low-pressure refrigerant (suction fluid) flowing from the indoor heat exchanger (28) is sucked into the suction channel (25b) of the ejector (25) via the suction duct (39). In the ejector (25), the high-pressure refrigerant accelerated and the low-pressure refrigerant sucked merge with each other upstream of the ejection channel (25c). The refrigerant thus merged is decelerated and pressurized in the diffusor, and ejected from the ejection channel (25c). The refrigerant thus ejected serves as an intermediate-pressure refrigerant in a gas-liquid two-phase state.

The intermediate-pressure refrigerant ejected from the ejector (25) flows into the gas-liquid separator (26). In the gas-liquid separator (26), the intermediate-pressure refrigerant thus flowing in is divided into a liquid refrigerant and a gas refrigerant. The liquid refrigerant in the gas-liquid separator (26) is further depressurized by the expansion valve (27) to be a low-pressure refrigerant. The low-pressure refrigerant depressurized in the expansion valve (27) flows into the indoor heat exchanger (28) via the bridge circuit (24), absorbs heat from indoor air and then evaporates. In this way, the indoor air is cooled and the room is cooled. The low-pressure gas refrigerant evaporating in the indoor heat exchanger (28) is sucked into the suction channel (25b) of the ejector (25) via the suction duct (39). On the other hand, the gas refrigerant in the gas-liquid separator (26) is sucked into the compressor (21) via the discharge pipe (21a). The intermediate-pressure gas refrigerant sucked into the compressor (21) is compressed again and then discharged.

### <Heating Operation>

In the heating operation, the four-way switching valve (22) is set in the second state. When the compressor (21) is operated in this state, the outdoor heat exchanger (23) serves as the evaporator and the indoor heat exchanger (28) serves as the radiator, thereby performing a refrigeration cycle.

The high-pressure refrigerant discharged from the compressor (21) flows into the indoor heat exchanger (28) via the four-way switching valve (22), discharges heat to indoor air and is condensed. In this way, the indoor air is heated and the room is heated. The high-pressure refrigerant (drive fluid) flowing from the indoor heat exchanger (28) flows into the depressurization channel (25a) of the ejector (25) via the bridge circuit (24). The high-pressure refrigerant flowing into the depressurization channel (25a) is accelerated by the nozzle and depressurized. Through this depressurization effect, the low-pressure refrigerant (suction fluid) of the suction pipe (21b) of the compressor (21) is sucked into the suction channel (25b) of the ejector (25) via the suction duct (39). In the ejector (25), the high-pressure refrigerant accelerated and the low-pressure refrigerant sucked merge with each other upstream of the ejection channel (25c). The refrigerant thus merged is decelerated and pressurized in the diffusor, and ejected from the ejection channel (25c). The refrigerant thus ejected serves as an intermediate-pressure refrigerant in a gas-liquid two-phase state.

The intermediate-pressure refrigerant ejected from the ejector (25) flows into the gas-liquid separator (26). In the gas-liquid separator (26), the intermediate-pressure refrigerant thus flowing in is divided into a liquid refrigerant and a gas refrigerant. The liquid refrigerant in the gas-liquid separator (26) is further depressurized by the expansion valve (27) to be a low-pressure refrigerant. The low-pressure refrigerant depressurized in the expansion valve (27) flows into the outdoor heat exchanger (23) via the bridge circuit (24), absorbs heat from outdoor air and then evaporates. The low-pressure gas refrigerant evaporating in the outdoor heat exchanger (23) is sucked into the suction channel (25b) of the ejector (25) via the suction duct (39). On the other hand, the gas refrigerant in the gas-liquid separator (26) is sucked into the compressor (21) via the suction pipe (21b). The intermediate-pressure gas refrigerant sucked into the compressor (21) is compressed again and then discharged.

### <Discharge Gas Temperature of Compressor>

When a normal single-stage compression refrigeration cycle is performed in a refrigerant circuit provided with no ejector such as in a case of, for example, the air conditioner of Patent Document 1, the low-pressure refrigerant flowing from the heat exchanger serving as the evaporator is directly sucked into the compressor, compressed and discharged. Therefore, the compression ratio may be relatively larger and the discharge gas temperature of the compressor may be relatively higher.

In the air conditioner (10) of this embodiment, the low-pressure refrigerant flowing from the evaporator is sucked into the suction pipe (25b) of the ejector (25), mixed with the high-pressure refrigerant in the ejection channel (25c) and then ejected. The refrigerant thus ejected is now the intermediate-pressure refrigerant in a gas-liquid two-phase state. This intermediate-pressure refrigerant is divided into a gas refrigerant and a liquid refrigerant in the gas-liquid separator (26). Then, the intermediate-pressure gas refrigerant is sucked into the compressor (21), compressed and discharged. Therefore, the compression ratio in the refrigeration cycle of this embodiment becomes smaller than that in the case where a normal single-stage compression refrigeration cycle is performed, resulting in a lower discharge gas temperature of the compressor. As a result, the disproportional reaction of the refrigerant is less likely to occur.

### -Refrigerant-

As a refrigerant filled in the refrigerant circuit (20), it is possible to use a single component refrigerant including hydrocarbon fluoride having the property of causing disproportional reaction or a refrigerant mixture including hydrocarbon fluoride having the property of causing disproportional reaction and at least one refrigerant other than the refrigerant including hydrocarbon fluoride.

As a hydrocarbon fluoride having the property of causing disproportional reaction, it is possible to use hydrofluoroolefin (HFO) including a carbon-carbon double bond which less affects the ozone layer and global warming and is easily decomposed by OH radicals. Specifically, as an example of such HFO refrigerants, it is preferable to use trifluoroethylene (HFO-1123) having excellent performance described in Japanese Patent Application Publication No. 2015-7257 and Japanese Patent Application Publication No. 2016-28119. Further, it is possible to apply, as refrigerants other than HFO-1123, refrigerants having the property of causing disproportional reaction to the present embodiment. Examples of those refrigerants are 3,3,3-trifluoropropen (HFO-1243zf), 1,3,3,3-tetrafluoropropen (HFO-1234ze), 2-fluoropropen (HFO-1261yf), 2,3,3,3-tetrafluoropropen (HFO-1234yf), and 1,1,2-trifluoropropen (HFO-1243yc) disclosed in Japanese Patent Application Publication No. H04-110388 and 1,2,3,3,3-pentafluoropropen (HFO-1225ye), trans-1,3,3,3-tetrafluoropropen (HFO-1234ze(E)) and cis-1,3,3,3-tetrafluoropropen (HFO-1234ze(Z)) disclosed in Japanese Patent Application Publication No. 2006-512426 to the present embodiment, as long as they have the property of causing disproportional reaction. Examples of hydrocarbon fluoride having the property of causing disproportional reaction may include acetylenic hydrocarbon fluoride including a carbon-carbon triple bond.

Further, in a case where a refrigerant mixture including hydrocarbon fluoride having the property of causing disproportional reaction is used, the refrigerant mixture preferably includes the above-mentioned HFO-1123. For example, a refrigerant mixture made of HFO-1123 and HFC-32 may be used. It is preferable that the composition ratio of this refrigerant mixture is, for example, as follows: HFO-1123: HFC-32 = 40:60 (unit: weight %). Moreover, a refrigerant mixture made of HFO-1123, HFC-32 and HFO-1234yf may also be used. It is preferable that the composition ratio of this refrigerant mixture is, for example, as follows: HFO-1123: HFC-32: HFO-1234yf = 40: 44: 16 (unit: weight %). Further, AMOLEA X series refrigerants (trademark: manufactured by Asahi Glass Co., Ltd.) or AMOLEA Y series refrigerants (trademark: manufactured by Asahi Glass Co., Ltd.) may also be used as refrigerant mixtures.

As other refrigerants included in the refrigerant mixture, other substances which vaporize and liquefy together with HFO-1123 such as hydrocarbons (HC), hydrofluorocarbons (HFC), hydrochlorofluoroolefins (HCFO), and chlorofluoroolefins (CFO) may appropriately be used.

HFC is a component that improves performance, and less affects the ozone layer and the global warming. It is preferable to use HFC having five or less carbon atoms. Specifically, examples of HFC include difluoromethane (HFC-32), difluoroethane (HFC-152a), trifluoroethane (HFC-143), tetrafluoroethane (HFC-134), pentafluoroethane (HFC-125), pentafluoropropane (HFC-245ca), hexafluoropropane (HFC-236fa), heptafluoropropane (HFC-227ea), pentafluorobutane (HFC-365), and heptafluorocyclopentane (HFCP). Among the HFCs mentioned above, difluoromethane (HFC-32), 1,1-difluoroethane (HFC-152a), 1,1,2,2-tetrafluoroethane (HFC-134), and 1,1,1,2-tetrafluoroethane (HFC-134a) and pentafluoroethane (HFC-125) are particularly preferable under consideration of the fact that they less affect the ozone layer and the global warming. These HFCs may be used alone or two or more of them may be used in combination.

HCFO is a compound having a carbon-carbon double bond, a large proportion of halogen in the molecule, and a suppressed combustibility. As HCFO, 1-chloro-2,3,3,3-tetrafluoropropene (HCFO-1224yd), 1-chloro-2,2-difluoroethylene (HCFO-1122), 1,2-dichlorofluoroethylene (HCFO-1121), 1-chloro-2-fluoroethylene (HCFO-1131), 2-chloro-3,3,3-trifluoropropene (HCFO-1233xf) and 1-chloro-3,3,3-trifluoropropene (HCFO-1233zd) may be used. Among the HCFOs mentioned above, HCFO-1224yd having particularly excellent performance is preferable. In addition, HCFO-1233zd is preferable since it has a high critical temperature, high durability and excellent coefficient of performance. HCFOs other than HCFO-1224yd may be used alone or two or more of these HCFOs may be used in combination.

### -Advantages of Embodiment-

According to this embodiment, in the refrigerant circuit (20) filled with a refrigerant including hydrocarbon fluoride having the property of causing disproportional reaction and causing the vapor compression refrigeration cycle the intermediate pressure gas refrigerant is sucked in from the suction pipe (21b) of the compressor (21) through the utilization of the ejector (25) and the gas-liquid separator (26). As a result, the discharge gas temperature of the compressor (21) may be lower than a discharge gas temperature in a case of a normal single-stage compression refrigeration cycle. Therefore, it is possible to reduce the risk of a disproportional reaction of a refrigerant. In this way, according to this embodiment, it is possible to provide an air conditioner (10) suitable for, in particular, refrigerants having the property of causing disproportional reaction at a high temperature and under a high pressure.

### <<Another Embodiment>>

The above-described embodiment may be modified as follows.

According to the above embodiment, the air conditioner (10) performing cooling operation and heating operation alike is described. However, the present invention is not limited thereto and is applicable to, for example, an air conditioner dedicated solely to cooling operation or heating operation. Further, the present disclosure is also applicable to, for example, a refrigeration device dedicated solely to heating such as a water heater, a refrigeration device for a container performing refrigeration or freezing. That is, according to the above embodiment, refrigerant is reversibly circulated in the refrigerant circuit (20). The present disclosure is not limited thereto and is also applicable to a refrigeration device having a refrigerant circuit in which a refrigerant is circulated in one direction and heat exchangers (23, 28), one of which is designated solely as the evaporator and the other of which is designated solely as the radiator, obtaining the same advantageous effects as those of the above embodiment.

### <<Reference Example>>

Hereinafter, a reference example will be described.

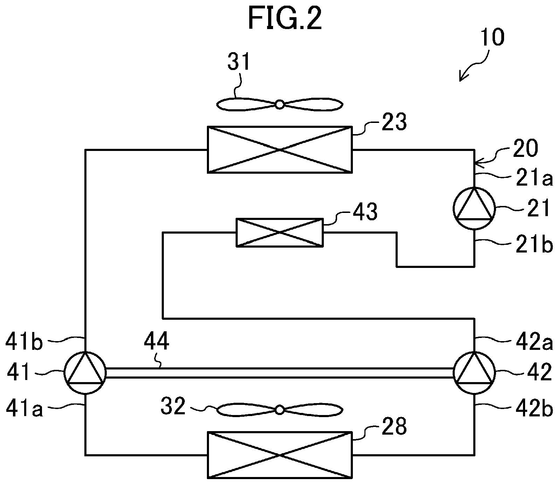

As shown in FIG. 2, the air conditioner (10) according to this reference example includes a refrigerant circuit (20). The refrigerant circuit (20) is filled with a refrigerant including hydrocarbon fluoride having the property of causing disproportional reaction. The refrigerant circuit (20) is configured such that the refrigerant is circulated so that the two-stage compression refrigeration cycle is performed.

The refrigerant circuit (20) includes a first compressor (21), an outdoor heat exchanger (23), an expander (41), an indoor heat exchanger (28), a second compressor (42), and an intermediate cooler (43). An expansion mechanism (not shown) of the expander (41) and the compression mechanism (not shown) of the second compressor (42) are connected to each other through a connecting shaft (44) and driven by the same driving source.

A first discharge pipe (21a) of the first compressor (21) is connected to a gas side end of the outdoor heat exchanger (23) and a first suction pipe (21b) of the first compressor (21) is connected to an outlet end of the intermediate cooler (43). A third suction pipe (41b) of the expander (41) is connected to a liquid-side end of the outdoor heat exchanger (23) and a third discharge pipe (41a) of the expander (41) is connected to a liquid-side end of the indoor heat exchanger (28). A second suction pipe (42b) of the second compressor (42) is connected to a gas-side end of the indoor heat exchanger (28) and a second discharge pipe (42a) of the second compressor (42) is connected to an inlet end of the intermediate cooler (43).

An outdoor fan (31) is configured such that outdoor air flows into the intermediate cooler (43) and the outdoor heat exchanger (23), moving in the direction from the intermediate cooler (43) to the outdoor heat exchanger (23) in this order. An indoor fan (32) is configured such that indoor air flows into the indoor heat exchanger (28).

### -Operation-

In the air conditioner (10) described above, only cooling operation is performed in which the refrigerant is circulated in the refrigerant circuit (20). When the first compressor (21), the expander (41) and the second compressor (42) are operated, the outdoor heat exchanger (23) serves as a radiator and the indoor heat exchanger (28) serves as an evaporator, thereby performing a refrigeration cycle.

The high-pressure refrigerant discharged from the first compressor (21) flows into the outdoor heat exchanger (23), dissipates heat to outdoor air and is condensed. The refrigerant that has flowed from the outdoor heat exchanger (23) flows into the expander (41) via the third suction pipe (41b). In the expander (41), the high-pressure refrigerant flowing in is depressurized to be a low-pressure refrigerant in a gas-liquid two-phase state. The low-pressure refrigerant flowing from the expander (41) flows into the indoor heat exchanger (28) via the third discharge pipe (41a) absorbs heat from indoor air and evaporates. In this way, the indoor air is cooled and the room is cooled. The low-pressure refrigerant evaporated in the indoor heat exchanger (28) is sucked into the second compressor (42) via the second suction pipe (42b), and is compressed to be an intermediate-pressure gas refrigerant. The intermediate-pressure gas refrigerant discharged from the second compressor (42) flows into the intermediate cooler (43) via the second discharge pipe (42a) and dissipates heat to the outdoor air. The gas refrigerant after heat dissipation is sucked into the first compressor (21) via the first discharge pipe (21a). The intermediate-pressure gas refrigerant sucked into the first compressor (21) is compressed again and then discharged.

### INDUSTRIAL APPLICABILITY

As can be seen from the foregoing description, the present disclosure is useful for a refrigeration device.

### DESCRIPTION OF REFERENCE CHARACTERS

- 10: Air Conditioner (Refrigeration Apparatus)
- 20: Refrigerant Circuit
- 21: Compressor
- 21b: Suction Pipe
- 23: Outdoor Heat Exchanger (Heat-Source-Side Heat Exchanger)
- 25: Ejector
- 25a: Depressurization Channel
- 25b: Suction Channel
- 25c: Ejection Channel
- 26: Gas-Liquid Separator
- 27: Expansion Valve (Expansion Mechanism)
- 28: Indoor Heat Exchanger (Utilization-Side Heat Exchanger)

## Claims

1. A refrigeration device (10) comprising a refrigerant circuit (20) including a compressor (21), a heat-source-side heat exchanger (23), and a utilization-side heat exchanger (28), the refrigerant circuit (20) performing a vapor compression refrigeration cycle in which one of the heat-source-side heat exchanger (23) and the utilization-side heat exchanger (28) serves as a radiator, the other of the heat-source-side heat exchanger (23) and the utilization-side heat exchanger (28) serves as an evaporator,
the refrigerant circuit (20) being filled with a refrigerant including hydrocarbon fluoride having a property of causing disproportional reaction,
the refrigerant circuit (20) further including:
an ejector (25) provided with
a depressurization channel (25a) depressurizing the refrigerant flowing from the radiator;
a suction channel (25b) sucking the refrigerant flowing from the evaporator through a depressurization effect of the depressurization channel (25a), and
an ejection channel (25c) merging, pressurizing and ejecting the refrigerant of the depressurization channel (25a) and the refrigerant of the suction channel (25b);
a gas-liquid separator (26) into which the refrigerant ejected from the ejection channel (25c) flows;
an expansion mechanism (27) depressurizing a liquid refrigerant flowing from the gas-liquid separator (26) into the evaporator, the liquid refrigerant being included in the refrigerant; and
a suction pipe (21b) guiding a gas refrigerant of the gas-liquid separator (26) into the compressor (21), the gas refrigerant being included in the refrigerant.

2. The refrigeration device of claim 1, wherein the refrigerant comprises a refrigerant including HFO-1123.
